# FASCICULE DE BREVET EUROPEEN

(11) **EP 1 361 042 B1**
(45) Date de publication et mention de la délivrance du brevet: **04.10.2006**
(21) Numéro de dépôt: 03008212.7
(22) Date de dépôt: 09.04.2003
(51) Int. Cl.: B29D 30/06, B29C 33/30

(54) **Moule pour pneus et procédé de moulage de pneus utilisant ce moule.**
Reifenformwerkzeug und seine Verwendung zur Reifenvulkanisierung.
Tyre mould and tyre moulding process using such a mould.

(30) Priorité: 29.04.2002 FR 0205397
(43) Date de publication de la demande: 12.11.2003
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: Marchadier, Denis, 63360 Gerzat (FR); Soulalioux, Alain, 43100 St Beauzire (FR)
(74) Mandataire: Lasson, Cédric Y. M.

(56) Documents cités:
- EP-A- 0 860 260
- US-A- 4 691 431
- DATABASE WPI Week 0252 Derwent Publications Ltd., London, GB; AN 2002-482183 XP002302944 -& JP 2002 002224 A (BRIDGESTONE) 8 janvier 2002 (2002-01-08)

## Description

La présente invention concerne la fabrication des pneumatiques. Plus précisément, elle se rapporte au moulage de la bande de roulement de ceux-ci.

Le brevet EP 0 569 909 décrit un type de moule dans lequel un très grand nombre d'éléments moulants sous la forme de tôles disposées transversalement assurent le moulage de la bande de roulement. La surface de moulage est constituée par l'ensemble des tranches ou chants de chaque tôle. Les tôles, parce qu'orientées transversalement, s'étendent d'une épaule à l'autre du pneumatique. La demande de brevet EP 0 860 260 propose de maintenir l'orientation des tôles aussi parfaitement radiale que possible grâce à des tôles intermédiaires elles-mêmes engagées dans des fentes usinées dans un anneau de support, et de ce fait guidées rigoureusement.

L'éventation de tels moules peut, en particulier pour certains types de sculptures, s'avérer localement insuffisante. De plus, les tôles du moule peuvent lentement s'encrasser au fur et à mesure des cycles de fabrication de pneumatiques et ainsi réduire progressivement le potentiel d'éventation du moule, ce qui oblige à nettoyer régulièrement le moule pour garantir la qualité d'aspect des pneumatiques produits.

De plus, l'ouverture et la fermeture de ce type de moule imposent de prévoir un déplacement coordonné, dans une direction radiale, de toutes les tôles formant ensemble une couronne périphérique feuilletée. Il se peut qu'apparaissent des frottements parasites contrariant les mouvements d'ouverture et de fermeture du moule. En outre, il peut s'avérer difficile de maintenir une répartition des jeux entre tôles aussi régulière que souhaitable. En conséquence, des bavures de moulage peuvent apparaître là où le jeu entre tôles est devenu supérieur au jeu nominal. Or l'un des buts poursuivis est de choisir le jeu nominal, comme expliqué dans le brevet EP 0 569 909, précisément pour éviter que le caoutchouc puisse fluer entre les tôles pendant toute la course de fermeture du moule.

Le brevet US 4691431 décrit un moule feuilleté comportant un empilage de plusieurs éléments adjacents de faible épaisseur, chaque élément étant traversé en direction radiale, par des rainures de faible profondeur qui favorisent l'éventation du moule.

L'objectif de l'invention est de pallier au moins certains des inconvénients précités, afin d'améliorer l'aptitude d'un moule de ce type à mouler des pneus d'une grande qualité d'aspect, notamment d'une qualité d'aspect qui reste constante après de nombreux cycles de moulage.

Un autre objectif de l'invention est de faciliter le montage d'un moule de ce type dont la conception même oblige à manipuler un très grand nombre de tôles avec le risque corollaire d'erreurs de montage.

Un autre objectif de l'invention est d'améliorer la reproductibilité de l'orientation des tôles. Celles-ci doivent en effet retrouver sensiblement la même position à chaque cycle de moulage, par exemple selon un plan radial.

L'invention propose un moule pour bande de roulement de pneumatique selon la revendication 1, ledit moule comportant une couronne périphérique feuilletée pour le moulage de l'extérieur de la bande de roulement, ladite couronne périphérique feuilletée comprenant un empilage dans la direction circonférentielle d'une pluralité d'éléments moulants de faible épaisseur, lesdits éléments étant orientés sensiblement radialement, le moulage de ladite bande de roulement étant effectué par la tranche radialement intérieure desdits éléments, ladite tranche ayant le profil voulu pour mouler une sculpture sur la bande de roulement, caractérisé en ce qu'au moins un groupe desdits éléments moulants adjacents comporte des découpes partielles qui coopèrent entre elles pour former au moins un canal d'éventation.

L'invention propose également, dans une variante particulière de réalisation, un tel moule dans lequel la couronne est divisée en secteurs et où pour chaque secteur, les éléments appartenant à un secteur sont solidarisés entre eux pour former un bloc unitaire, chaque secteur pouvant être déplacé lors des mouvements d'ouverture et de fermeture du moule.

Dans le présent mémoire, lorsque l'on qualifie d'intérieure une pièce ou une surface, cela signifie qu'elle se situe vers le centre du moule, c'est-à-dire du côté de la cavité interne de moulage. Lorsque c'est le qualificatif extérieur qui est utilisé, cela signifie que la surface ou la pièce se situe plus loin de ladite cavité de moulage. Par exemple, s'agissant des tôles moulant la bande de roulement, le chant intérieur est le chant de la tôle qui forme la surface de moulage, en contact avec le caoutchouc lors du moulage, alors que le côté, le chant ou la tranche extérieure est la surface en contact avec un support des tôles.

L'invention s'étend aussi à un procédé de fabrication d'un pneu selon la revendication 12, utilisant un moule tel qu'il vient d'être décrit. Dans ce cas, un avantage de l'utilisation de ce moule réside dans le fait qu'il contribue à une excellente éventation lors du moulage, par les canaux d'éventation et les interstices entre tôles.

Pour un exposé général sur le fonctionnement d'un tel moule, le lecteur est invité à consulter le brevet EP 0 569 909 susmentionné, et en particulier la partie de ce brevet relative à la figure 5.

Les figures suivantes illustrent l'invention et permettent d'en saisir tous les avantages.
La figure 1 est une vue plane d'un élément moulant de faible épaisseur selon l'invention.
La figure 2 est une vue plane d'un second élément moulant de faible épaisseur apte à coopérer selon l'invention avec l'élément moulant de la figure 1.
La figure 3 est une vue plane d'un troisième élément moulant de faible épaisseur apte à coopérer selon l'invention avec les éléments moulants des figures 1 et 2.
La figure 4 est une vue plane d'un quatrième élément moulant comparable à celui de la figure 2.
La figure SA représente une variante d'élément de faible épaisseur selon l'invention.
La figure 5B est une vue schématique de profil de l'élément de la figure SA.
La figure 6 est une coupe méridienne d'un moule conforme à l'invention dans son application à une première catégorie de moules.
La figure 7 est une perspective montrant deux secteurs espacés l'un de l'autre, comme ils pourraient l'être lorsque le moule est ouvert, conformes à l'invention dans son application à une deuxième catégorie de moule, montrant une deuxième variante de réalisation de l'invention.
La figure 8 est une coupe par un plan méridien d'un moule selon la deuxième variante de l'invention, en position de moulage, c'est à dire moule fermé.
La figure 9 est une coupe par un plan perpendiculaire à l'axe, moule fermé, montrant la deuxième variante de l'invention.
La figure 10 est une coupe par un plan perpendiculaire à l'axe, moule ouvert, montrant la deuxième variante de l'invention.
La figure 11 est une coupe par un plan méridien du moule de l'invention dans son application à une troisième catégorie de moule, en position de moulage, c'est à dire moule fermé.
La figure 12 montre une variante supplémentaire de réalisation des secteurs selon l'invention.

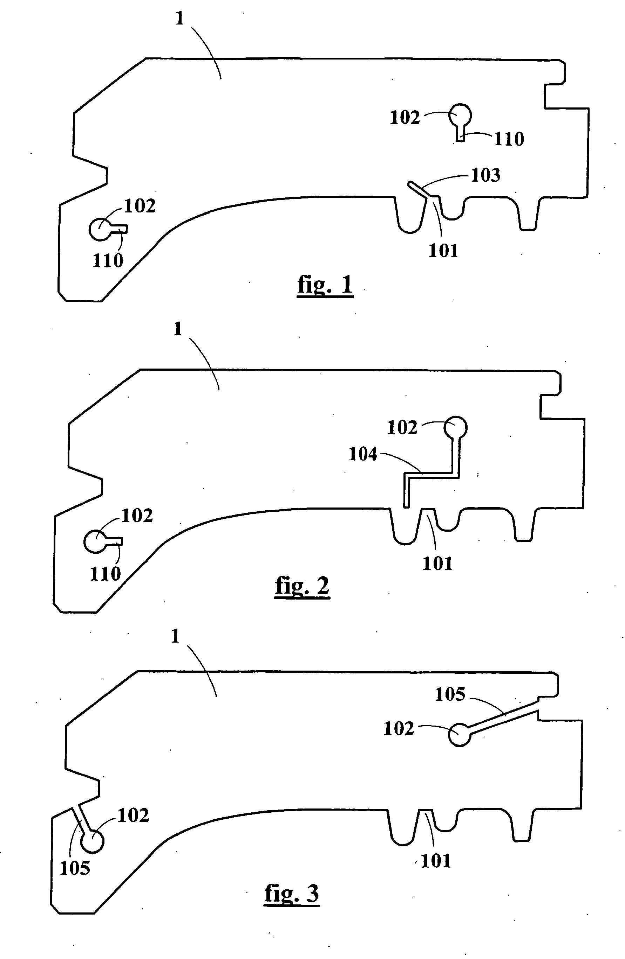

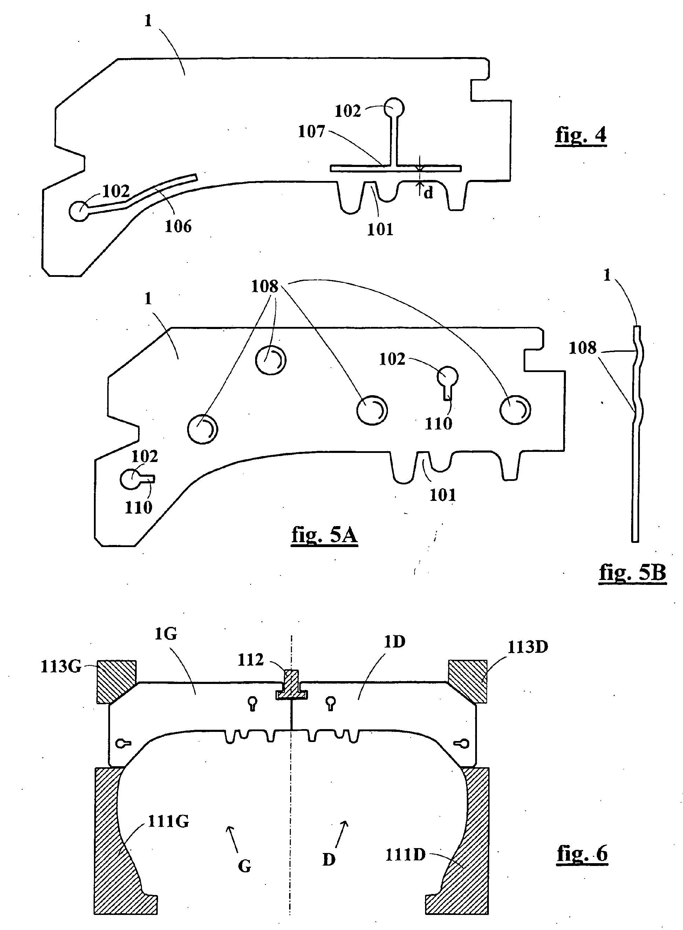

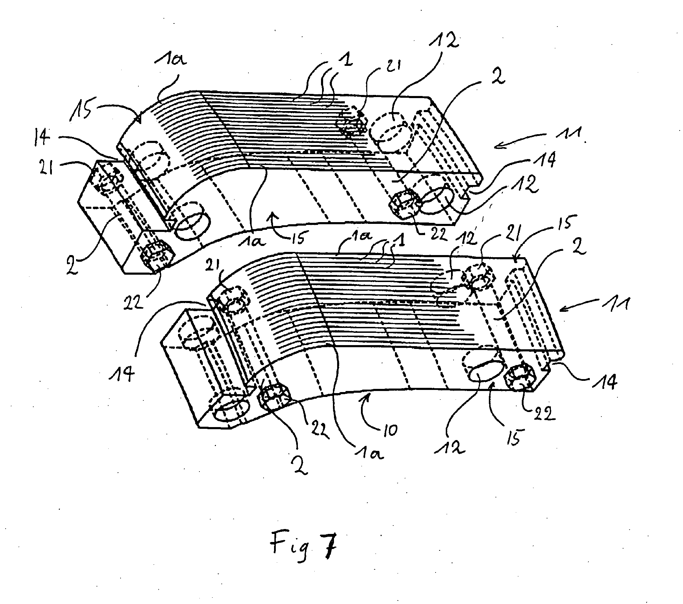

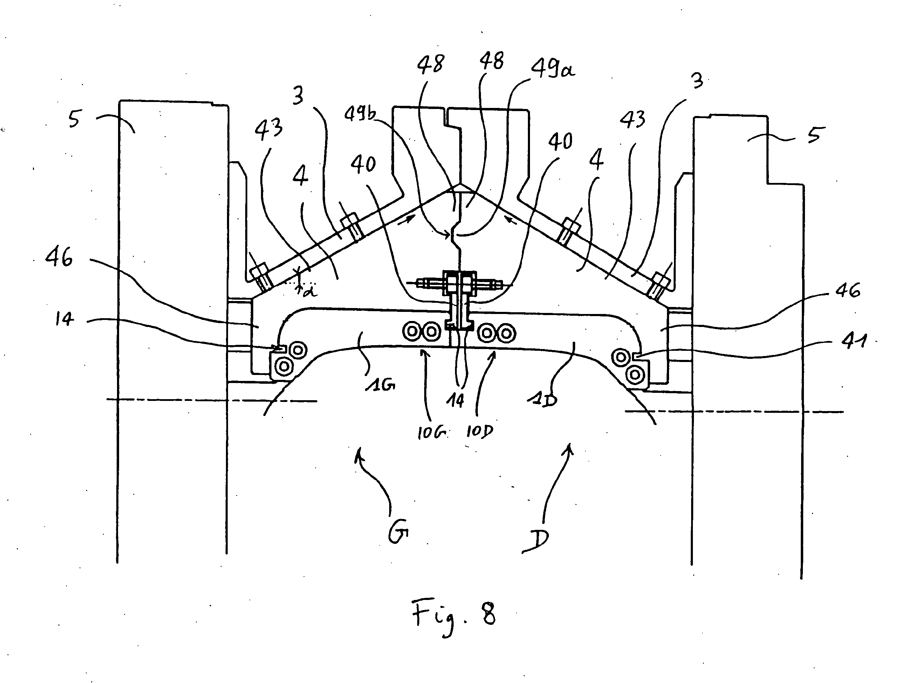

Dans un mode de réalisation du moule, les éléments moulants de la couronne périphérique feuilletée, servant au moulage de la bande de roulement, sont des tôles adjacentes dont l'épaisseur est comprise entre 0.1 mm (et de préférence 0.5 mm) et 5 mm. La figure 1 montre une telle tôle 1. Une couronne feuilletée peut comprendre quelques milliers de tôles adjacentes. L'obtention à partir de tôles est une voie de réalisation très avantageuse des éléments moulants de faible épaisseur caractéristiques de ce type de moule. L'épaisseur des tôles correspond à la résolution du moule pour définir la sculpture. On utilise par exemple des tôles d'acier ; elles sont avantageusement découpées toutes perpendiculairement à leur plan, selon un profil dicté par les motifs de sculpture qu'il faut réaliser. En découpant les tôles toujours perpendiculairement, certaines surfaces de la sculpture de la bande de roulement auront l'aspect de marches d'escalier, ce qui confère à la bande de roulement du pneumatique moulé une apparence caractéristique de cette technologie.

Comme il apparaît à l'étude des figures 1 à 4, ces tôles 1 peuvent comporter des découpes partielles (102, 103, 104, 105, 106, 107). Ces découpes sont telles que, lorsque les tôles sont en place les unes contre les autres, elles permettent de créer un canal d'éventation reliant l'intérieur du moule (ou à tous le moins une zone proche de la surface de moulage) à l'extérieur du moule. Le fait de faire coopérer plusieurs tôles pour créer un canal est avantageux car il est préférable que chaque tôle demeure complète et monobloc. De plus, cette coopération apporte d'autres avantages. Cela permet, en répartissant les découpes sur plusieurs tôles, de ne pas affaiblir une tôle exagérément par rapport aux autres. Cela peut également permettre de créer des canaux ou des portions de canal de section importante sans devoir se limiter à l'épaisseur unitaire des tôles. Cette éventation est différente de celle qui peut avoir lieu entre les tôles selon les principes décrits dans EP 569 909 et EP 860 260.

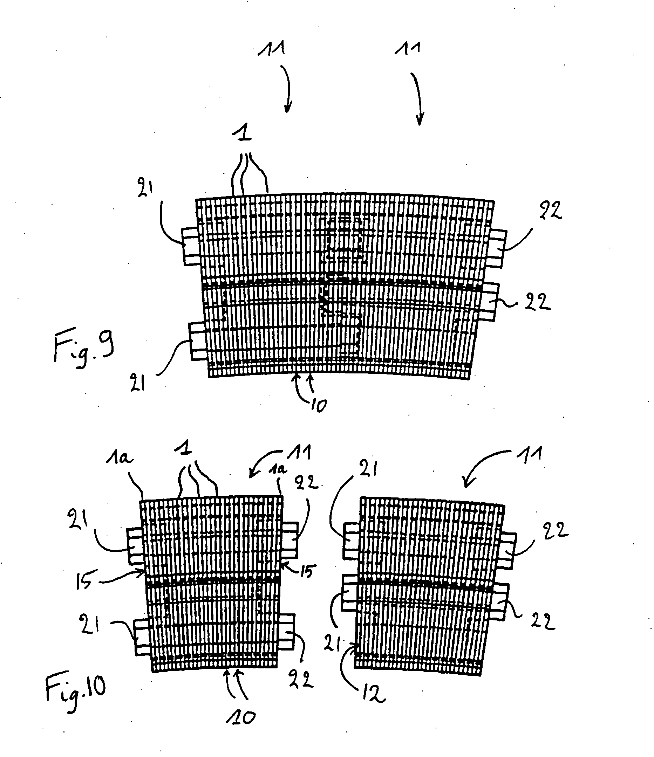

La coopération des découpes partielles est clairement illustrée si l'on considère ensemble les figures 1, 2, 3 et 4. Sur la figure 1, la référence 103 correspond à un exemple de découpe débouchant sur le chant intérieur de la tôle, c'est à dire à la surface de moulage du moule. La découpe débouchante 103 permet sur l'exemple de la figure 1 d'éventer l'arrête d'un élément de sculpture 101 du pneumatique. Une tôle voisine représenté à la figure 2 comporte une découpe 104 reliant le conduit crée par la découpe débouchante 103 à la découpe 102. Les découpes de liaison 104 peuvent prendre toute forme convenable et compatible avec leur mode d'obtention. Les découpes 102 sont semblables sur chaque tôle d'un groupe considéré. Ces découpes communes 102 disposées en regard les unes par rapport aux autres permettent de créer un conduit traversant le groupe de tôles dans le sens circonférentiel afin de relier le réseau d'éventation. Le réseau d'éventation est relié à l'extérieur du moule par l'intermédiaire de découpes d'extraction 105 (visible à la droite de la figure 3) disposées sur cet exemple sur une tôle voisine entre une découpe commune 102 et une zone centrale du moule dans laquelle il peut être crée une dépression si besoin est. Comme on l'a vu, les découpes communes 102 permettent de créer une liaison entre les différentes tôles d'un groupe, c'est à dire qu'une tôle comportant une découpe d'extraction 105 peut ne pas être directement voisine des autres tôles formant avec elle le conduit d'éventation. Des découpes d'extraction 105 peuvent également être disposées par exemple sur la partie axialement extérieure des tôles, en regard des découpes communes 102 correspondantes (voir partie gauche de la figure 3).

Ainsi, on comprend que l'empilement des tôles des figures 1, 2 et 3 permet de créer lorsque le moule est fermé, c'est à dire que les tôles sont serrées les unes contre les autres, une éventation supplémentaire créée par la connexion des découpes 103, 104, 102 et 105 dans cet ordre. Un avantage de l'invention est que chaque tôle individuelle ne comporte qu'une découpe partielle qui ne remet en cause ni son intégrité ni sa robustesse.

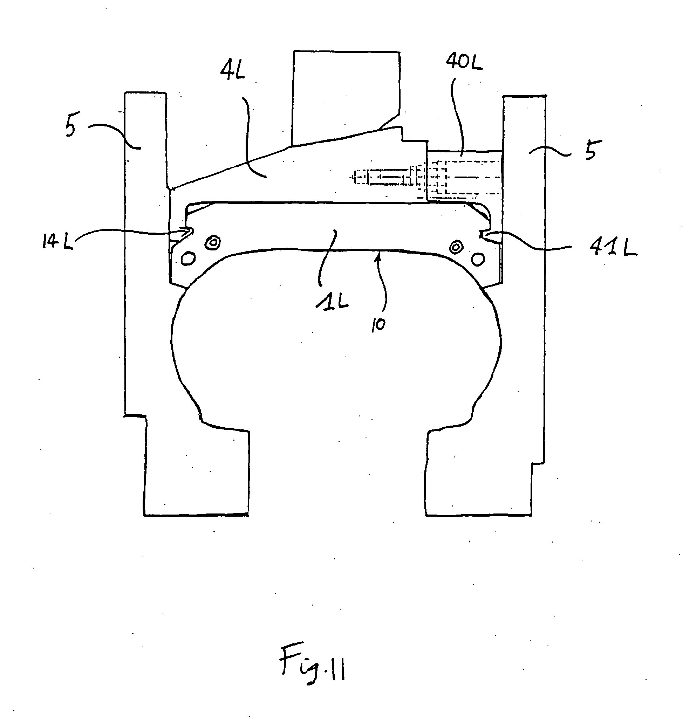

La figure 4 représente un autre exemple de découpes de liaison 106 et 107 aptes à permettre d'autres configuration de réseaux d'éventation selon l'invention. On peut par exemple y associer une ou plusieurs tôles adjacentes comportant chacune une ou plusieurs découpes débouchantes 103 selon le principe représenté à la figure 1.

Cependant, selon l'invention, on peut également utiliser ce type de découpes 106 et 107 en l'absence de découpes débouchantes 103 sur les tôles adjacentes du type de celle de la figure 1. Dans ce cas, les découpes 106 ou 107 ont pour fonction d'améliorer l'éventation qui a lieu entre les tôles. L'éventation entre tôles est décrite dans le brevet EP 569 909. Ce type d'éventation est améliorée selon la présente invention en ce que la distance qui sépare l'intérieur du moule des découpes 106 ou 107 est réduite par rapport à celle qui sépare la tranche intérieure de la tranche extérieure des tôles. Les découpes 106 et 107 s'étendent sensiblement le long de la tranche intérieure 10 à une distance "d" de la surface de moulage, c'est à dire de la partie de la tranche la plus proche, d étant de préférence inférieure à 10 mm. Ainsi, les gaz doivent franchir, par les interstices entre tôles, une distance de quelques millimètres tout au plus au lieu de plusieurs centimètres selon le brevet EP 569 909. Pour un débit équivalent, la pression nécessaire à l'éventation est donc réduite de manière significative. Inversement, pour une pression équivalente, le débit d'éventation peut être augmenté. L'un des objectifs de l'invention, celui d'améliorer la qualité du moulage est donc atteint par cette disposition. Cet effet peut également être utilisé afin par exemple de raccourcir le temps de moulage, de permettre le moulage de gommes plus rigides ou de permettre le moulage de sculptures plus profondes.

Les figures 5A et 5B illustrent une variante préférée de l'invention dans laquelle les éléments de faible épaisseur 1 comportent des déformations 108. Ces déformations 108 peuvent être simplement obtenues par emboutissage dans le cas de tôles. Ces déformations constituent des ressorts dont le rôle est d'écarter les tôles lorsque le moule s'ouvre, c'est à dire à chaque cycle de moulage. Ceci a pour effet d'éviter que certaines parties du moule perdent de leur potentiel d'éventation au fil des cycles de moulage du fait que certaines tôles demeureraient jointes lors de l'ouverture du moule. De préférence, ces déformations 108 sont réparties sur l'ensemble des tôles constituant la circonférence du moule afin que le mouvement d'écartement soit sensiblement uniforme le long de la circonférence du moule. Dans ce but, on peut par exemple prévoir qu'une tôle sur deux présente cette disposition. La hauteur des déformations élastiques 108 est comprise de préférence entre 0.01 et 0.1 mm.

Naturellement, l'invention n'est pas limitée à ces exemples particuliers. L'homme du métier peut par exemple en fonction du type de sculpture, appliquer d'une multitude de manières différentes ce principe de l'invention selon lequel on crée un réseau d'éventation dans un moule constitué de tôles empilées grâce à la coopération d'une pluralité de découpes réparties sur une pluralité de tôles.

La figure 6 représente en coupe méridienne un moule selon l'invention. La couronne est divisée en deux parties (G et D), et comporte, transversalement, deux tôles distinctes (1G et 1D) et adjacentes appartenant chacune à l'une des parties. Les tôles ou éléments moulants sont désignés en général par la référence 1. Lorsque l'on veut désigner plus spécifiquement un élément ou une partie d'élément appartenant à la partie G, on utilise la référence 1G. Lorsque l'on veut désigner plus spécifiquement un élément ou une partie d'élément appartenant à la partie D, on utilise la référence 1D. Ce moule est formé par un grand nombre de tôles 1 telles que décrites plus haut et par des coquilles 111G et 111D moulant les flancs du pneumatique. Les tôles prennent appui sur les coquilles et sont guidées par une ceinture 112 et des frettes coniques 113G et 113D. une tôle unitaire moulant toute la largeur de la bande de roulement peut également remplacer les deux tôles 1G et 1D. Le fonctionnement de ces différents types de moule est décrit dans le brevet EP 0 569 909.

Les figures 7 à 12 illustrent un mode préféré de réalisation caractérisé par le groupement des tôles en sous-ensembles. Sur ces figures, les découpes décrites plus haut ne sont pas représentées. Chacun de ces sous-ensembles (ou seulement un nombre limité d'entre eux) contient une ou plusieurs tôles telles qu'exposées plus haut c'est à dire comportant des découpes partielles d'éventation.

La figure 7 représente ce principe de l'invention selon lequel les éléments de faible épaisseur 1 de la couronne feuilletée sont groupés en sous-ensembles monoblocs constituant des secteurs 11.

On voit à la figure 8 que la couronne est divisée en deux parties (G et D), et que la couronne comporte, transversalement, deux tôles distinctes (1G et 1D) et adjacentes appartenant chacune à l'une des parties. Les tôles ou éléments moulants sont désignés en général par la référence 1.

De préférence, au moins l'extrémité côté partie moulante, c'est à dire côté tranche 10 des tôles 1, présente une épaisseur progressivement décroissante en se déplaçant radialement vers l'axe du moule. Chacune des tôles forme ainsi un léger coin, dont l'angle correspond sensiblement à la valeur obtenue en divisant 360° par le nombre de tôles sur un tour dans la couronne périphérique de moulage. De cette façon, les tôles peuvent se disposer naturellement en éventail lorsqu'on les rassemble et présenter entre elles un jeu sensiblement constant. On consultera à ce sujet les demandes de brevet EP 0 916 419 et EP 0 916 421.

Pour former la couronne périphérique feuilletée, les tôles 1 sont groupées par secteurs 11, comme on le voit très bien notamment aux figures 7, 9 et 10. A cette fin, les tôles 1 d'un secteur 11 sont prises en tenaille par un dispositif de fixation comportant deux têtes faisant protubérance, tel qu'un boulon 2 (dont la tête forme une première tête 21) et un écrou 22 (formant la seconde tête). La tête 21 de chaque boulon 2 et l'écrou 22 appuient sur le flanc libre 15 de chacune des tôles la au bord de chaque secteur 11. Les dispositifs de fixation (ensembles boulon 2 et écrou 22) sont disposés en alternance d'un secteur à l'autre (voir figures 7 et 10), chaque secteur comportant des évidements 12 permettant de loger la tête des dispositifs de fixation des secteurs adjacents. Les évidements 12 sont obtenus en créant des perçages dans un nombre suffisant de tôles lors de la découpe desdites tôles. Cela permet d'amener les secteurs en contact (voir figure 9) pour former la couronne continue assurant le moulage de la bande de roulement.

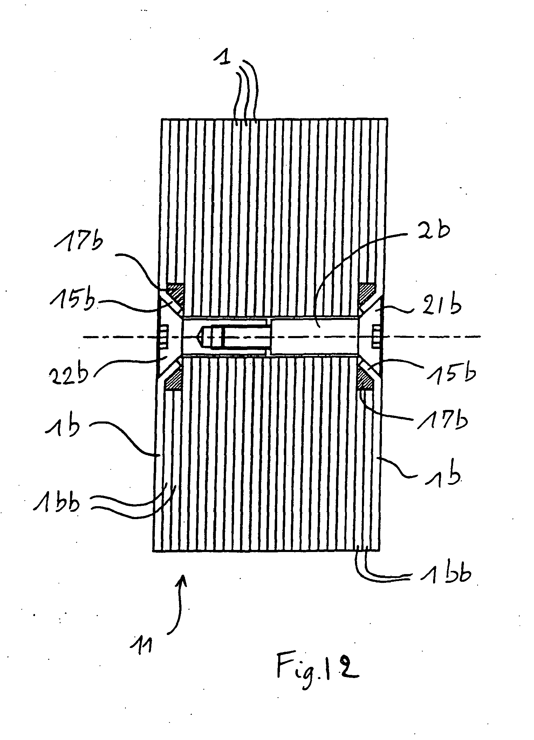

De préférence, les moyens de fixations sont disposés dans les découpes communes 102 (voir figures 1 à 5). Dans ce cas, la présence d'une aile 110 (voir figures 1 à SA) sur le profil des découpes communes 102 permet de s'assurer que la circulation des gaz d'éventation n'est pas limitée par les moyens de fixation des paquets de tôles. De plus, les évidements 12 peuvent être reliés aux découpes 102 afin de permettre la circulation des gaz d'éventation d'un bloc à l'autre en dépit du décalage des moyens de fixation et donc du fait que les découpes 102 ne sont pas en regard d'un sous-ensemble à l'autre. Cette liaison peut être établie par une découpe supplémentaire (non représentée) reliant au moins un évidement 12 et une découpe 102 d'au moins une des tôles concernées par lesdits évidements 12. Au passage, signalons que la conséquence du type de moyen de maintien représenté ici est qu'il y a nécessairement un nombre pair de secteurs pour mouler toute la bande de roulement, qu'il y ait ou non deux parties axiales G et D, mais ce n'est pas nécessairement le cas pour tous les types de moyens de maintien (voir par exemple figure 12).

Le nombre d'éléments par secteur est typiquement compris entre 10 et 1000. Le nombre d'éléments est identique pour tous les secteurs, ou différent d'un secteur à l'autre.

Différents moyens peuvent être utilisés pour manipuler les groupes de tôles assemblées et maintenues en secteurs. Il s'agit ici d'organiser les mouvements de secteurs nécessaires pour ouvrir et fermer le moule. On peut par exemple fixer les tôles appartenant à un secteur sur un boîtier, chaque boîtier pouvant être déplacé lors des mouvements d'ouverture et de fermeture du moule.

On voit à la figure 8 que chaque secteur 11 est monté sur un boîtier 4 formant un support monobloc, pouvant être une pièce standard commune à un grand nombre de sculptures différentes. Naturellement, ceci n'est qu'un exemple de réalisation. Même si un boîtier 4 est bien entendu généralement adapté à la dimension d'un pneumatique, comme il n'est pas par lui-même moulant, il peut être utilisé pour plusieurs sculptures différentes et n'est donc pas spécifique à un seul pneumatique. Pour réaliser cette fixation, on découpe les tôles de façon à obtenir des rainures 14 qui sont engagées sur une protubérance 41 aménagée d'un côté sur le boîtier 4, le secteur étant immobilisé par une bride 40, également en prise dans une autre rainure 14 de chaque tôle et vissée sur le boîtier 4. Ainsi, les tôles 1 appartenant à un secteur 11 sont fixées sur un boîtier 4, chaque boîtier 4 pouvant alors être déplacé lors des mouvements d'ouverture et de fermeture du moule. Le nombre de tôles peut être identique pour tous les secteurs, ou bien les secteurs peuvent rassembler un nombre de tôles différent.

Chacun des boîtiers comporte, outre la protubérance 41, un bord latéral 46, un dos 43, et un bord central 48 destiné à venir en contact avec le bord central 48 correspondant du boîtier adjacent de l'autre partie. Notons encore la présence d'un ergot 49a sur chacun des boîtiers 4 de la partie D, engagé dans une découpure 49b réalisée sur chacun des boîtiers 4 de la partie G, afin de positionner avec grande précision les boîtiers 4 et donc les tôles 1 à la même hauteur radialement pendant toute la phase de fermeture du moule, surtout pendant la phase finale de fermeture.

Chacun des boîtiers 4 est monté sur une rampe 3 par l'intermédiaire d'une glissière (non représentée), afin de permettre un mouvement relatif symbolisé par une flèche tracée sur le dos du boîtier. Dans cet exemple, chacune des parties G et D du moule comporte un plateau 5 sur lequel est montée une rampe 3. La rampe 3 présente une portée tronconique 30 d'angle α, radialement intérieure, en contact avec lesdits boîtiers 4. Cette rampe permet de commander le mouvement des boîtiers 4 pour les amener dans leur position de fermeture, telle que représentée à la figure 8, ou pour les amener dans leur position d'ouverture (non représentée à la figure 8, mais correspondant pour les groupes de tôles à la figure 10), comme connu en soi pour les moules à secteurs en deux parties axiales.

Dans chaque secteur, les tôles 1 sont montées sur le boîtier en étant disposées toutes selon le même angle par rapport à la direction radiale. Dans cet exemple, les tôles sont disposées de façon méridienne. Autrement dit, lorsque l'on examine la couronne périphérique feuilletée en coupe selon un plan perpendiculaire à l'axe géométrique du moule (voir figure 9), les tôles sont disposées de façon à comprendre un rayon, et leur prolongement virtuel comprend l'axe géométrique du moule. Ceci n'est nullement limitatif et on peut admettre que les tôles soient quelque peu inclinées.

A la figure 11, on indique que l'invention n'est pas limitée à la catégorie de moule comportant deux parties (G et D) axialement, mais peut tout autant trouver intérêt à s'appliquer à une autre catégorie de moules, axialement en une seule partie. Dans ce cas, les éléments utilisés sont des tôles 1L dont la largeur correspond sensiblement à la largeur de la bande de roulement. Chaque secteur est monté sur un boîtier 4L formant aussi un support monobloc, pouvant aussi être une pièce standard commune à un grand nombre de sculptures différentes, de largeur adaptée. On fixe les tôles 1L grâce à des rainures 14L engagées sur des protubérances 41L aménagées d'un côté sur le boîtier 4L et de l'autre sur une bride 40L qui est vissée sur le boîtier 4L.

De nombreuses variantes de réalisation peuvent être envisagées pour maintenir les tôles 1 rassemblées par secteurs 11. Ainsi, aux boulons 2 montrés aux figures 7 à 10 où l'on voit que les têtes 21 et les écrous 22 font protubérance, on peut par exemple substituer (voir figure 12) des vis 2b dont les têtes 21b et les écrous 22b correspondant ont une allure tronconique et sont noyés dans l'épaisseur de chaque secteur, les têtes 21b et écrous 22b coopérant avec une portée tronconique 15b aménagée sur les tôles 1b installées aux bords de chaque secteur. Notons que dans la réalisation illustrant ce mémoire, deux tôles lbb immédiatement adjacentes aux tôles 1b de bord de secteur comportent un perçage plus grand, permettant de loger au montage du moule une rondelle 17b permettant de reprendre les efforts de serrage et d'assurer l'alignement des tôles dans le secteur.

Bien entendu, l'homme du métier aura compris que de nombreuses autres variantes de réalisation de la fonction de maintien entre elles des tôles d'un secteur peuvent être imaginées sans sortir du cadre de la présente invention.

L'invention permet de fabriquer des moules ayant un grand potentiel d'éventation d'une façon qui se marie bien avec les techniques de conception et de réalisation assistées par ordinateur, avec un délai de réalisation très court. Les moules ainsi réalisés sont très robustes ; ils s'accommodent très bien d'un grand nombre de cycles d'ouverture et de fermeture du fait en particulier que l'éventation à lieu en partie au moins par l'intermédiaire des canaux d'éventation (en addition à l'éventation qui a lieu entre les éléments moulants).

Les moules selon l'invention permettent de produire des pneumatiques de meilleure qualité d'aspect tout en limitant l'entretien nécessaire au maintien du potentiel d'éventation. De plus ils permettent de mouler des pneumatiques dont les marques d'éventation sont plus discrètes. En effet, les tétines de moulage crées par les découpes débouchantes 103 (voir figure 1) ne sont pas nécessairement perpendiculaires à la surface de moulage comme c'est généralement le cas pour les moules classiques (non feuilletés) dont les évents résultent de perçages traversant les éléments moulants. Au contraire, on peut selon l'invention orienter librement les découpes débouchantes 103 par exemple selon une orientation proche de celle de la surface de la bande de roulement. On comprend que dans ce cas, la présence éventuelle de tétines (on emploi également le terme de "barbe") sur le produit fini est moins gênante. Une orientation de ces tétines selon un angle inférieur à 60° par exemple de l'ordre de 45° par rapport à la surface de la bande de roulement représente un compromis avantageux entre les critères d'aspect et celui des contraintes de démoulage.

D'une façon générale, le terme "pneumatique" employé dans le présent mémoire couvre naturellement tout type de bandage élastique, pneumatique ou non pneumatique, l'invention concernant essentiellement le moulage de ce "pneumatique" et non son fonctionnement.

## Revendications

1. Moule pour bande de roulement de pneumatique, comportant une couronne périphérique feuilletée pour le moulage de l'extérieur de la bande de roulement, ladite couronne périphérique feuilletée comprenant un empilage dans la direction circonférentielle d'une pluralité d'éléments moulants (1) de faible épaisseur, lesdits éléments étant orientés sensiblement radialement, le moulage de ladite bande de roulement étant effectué par la tranche (10) radialement intérieure desdits éléments, ladite tranche ayant le profil voulu pour mouler une sculpture sur la bande de roulement, **caractérisé en ce que** plusieurs éléments moulants adjacents comportent des découpes partielles (102, 104, 105, 106, 107) qui coopèrent entre elles pour former au moins un canal d'éventation.

2. Moule selon la revendication 1 dont l'ensemble des élément moulants (1) comportent des découpes (102) en regard les unes par rapport aux autres de sorte qu'elles créent un conduit sensiblement circonférentiel connectant entre elles des découpes de liaison (104) et au moins une découpe d'extraction (105).

3. Moule selon l'une des revendications précédentes dans lequel des éléments moulants (1) comportent des découpes débouchantes (103) reliant ledit canal d'éventation au volume intérieur du moule.

4. Moule selon l'une des revendications 1 ou 2 dans lequel les découpes partielles (106, 107) s'étendent sensiblement le long de la tranche intérieure (10) à une distance "d" de la partie la plus proche de la tranche, d étant inférieure à 10 mm.

5. Moule selon l'une des revendications précédentes dans lequel des éléments moulants (1) comportent des déformations (108) aptes à assurer une fonction de ressort tendant à écarter les éléments les uns des autres lorsque le moule est ouvert.

6. Moule selon l'une des revendications précédentes dans lequel la couronne est divisée en secteurs (11) et dans lequel, pour chaque secteur, les éléments appartenant à un secteur sont solidarisés entre eux pour former un bloc unitaire, chaque secteur pouvant être déplacé lors des mouvements d'ouverture et de fermeture du moule.

7. Moule selon la revendication 6, dans lequel les éléments appartenant à un secteur sont fixés sur un boîtier (4), chaque boîtier pouvant être déplacé lors des mouvements d'ouverture et de fermeture du moule.

8. Moule selon l'une des revendications 6 ou 7, dans lequel la couronne est divisée en deux parties (G, D), en ce que la couronne comporte, transversalement, deux éléments (1G, 1D) distincts et adjacents appartenant chacun à l'une des parties.

9. Moule selon l'une des revendications 6 à 8, **caractérisé en ce que** chaque élément a une épaisseur comprise entre 0,1 mm et 5 mm, et **en ce que** l'extrémité côté tranche (10) de moulage desdits éléments présente une épaisseur progressivement décroissante en se déplaçant radialement vers l'axe du moule.

10. Moule selon l'une des revendications 6 à 9, dans lequel les éléments d'un secteur sont pris en tenaille par un dispositif de fixation comportant deux têtes faisant protubérance et appuyant chacune sur le flanc libre de chacun des éléments au bord du secteur, les dispositifs de fixation étant disposés en alternance d'un secteur à l'autre, chaque secteur comportant des évidements (12) permettant de loger la tête des dispositifs de fixation des secteurs adjacents lorsque les secteurs sont en contact pour former ladite couronne de moulage de la bande de roulement.

11. Moule selon l'une des revendications 6 à 10, comportant un nombre pair de secteurs.

12. Procédé de fabrication d'un pneu, **caractérisé en ce que** l'on utilise un moule selon l'une des revendications 1 à 11, dans lequel l'éventation du moule se fait au moins en partie par ledit au moins un canal d'éventation.

## Claims

1. Mould for a tyre tread, comprising a laminated peripheral crown for moulding the exterior of the tread, the said laminated peripheral crown comprising a stack in the circumferential direction of a plurality of thin moulding elements (1), the said elements being orientated substantially radially, the said tread being moulded by the radially internal edge (10) of the said elements, the said edge having the profile desired for moulding a pattern on the tread, **characterised in that** several adjacent moulding elements comprise partial cutouts (102, 104, 105, 106, 107) which cooperate together to form a venting channel.

2. Mould according to Claim 1, whose assembly of moulding elements (1) comprise cutouts (102) aligned with one another so as to produce an essentially circumferential duct which joins to one another connecting cutouts (104) and at least one extraction cutout (105).

3. Mould according to either of the preceding claims, in which the moulding elements (1) comprise open cutouts (103) which connect the said venting channel to the interior volume of the mould.

4. Mould according to either of Claims 1 or 2, in which the partial cutouts (106, 107) extend substantially along the internal edge (10) a distance "d" from the nearest part of the edge, "d" being less than 10 mm.

5. Mould according to any of the preceding claims, in which the moulding elements (1) comprise deformations (108) designed to act as spring elements which tend to push the elements apart when the mould is open.

6. Mould according to any of the preceding claims, in which the crown is divided into sectors (11) and in which, for each sector, the elements belonging to that sector are held together to form a unitary block, and each sector can be displaced during the movements of opening and closing the mould.

7. Mould according to Claim 6, in which the elements belonging to a sector are fixed on a casing (4) and each casing can be displaced during the movements of opening and closing the mould.

8. Mould according to either of Claims 6 or 7, in which the crown is divided into two parts (G and D), **characterised in that in that** the crown comprises, transversely, two distinct and adjacent elements (1G, 1D) each of which belongs to one of those parts.

9. Mould according to any of Claims 6 to 8, **characterised in that** the thickness of each element is between 0.1 mm and 5 mm, and the thickness of the end of the said elements on the moulding edge (10) side decreases progressively moving radially towards the axis of the mould.

10. Mould according to any of Claims 6 to 9, in which the elements of a sector are clamped together by a fixing device comprising two protruding heads each of which rests against the free surface of each of the elements bounding the sector, the fixing devices being arranged in alternation from one sector to the next, each sector comprising recesses (12) which accommodate the head of the fixing devices of the adjacent sectors when the sectors are in contact to form the said crown for moulding the tyre tread.

11. Mould according to any of Claims 6 to 10, comprising an even number of sectors.

12. Process for fabricating a tyre, **characterised in that** a mould according to any of Claims 1 to 11 is used, in which the mould is vented at least in part through the said at least one venting channel.

## Patentansprüche

1. Form für Laufstreifen von Luftreifen, die einen äußeren lamellierten Ring zum Formen der Außenseite des Laufstreifens aufweist, wobei der äußere lamellierte Ring in Umfangsrichtung eine Abfolge einer Vielzahl von Formelementen (1) von geringer Dicke umfasst, die Elemente in etwa radial orientiert sind, das Formen des Laufstreifens durch die radial innere Seitenfläche (10) der Elemente erfolgt und die Seitenfläche das zum Formen einer Profilierung an dem Laufstreifen gewünschte Profil aufweist, **dadurch gekennzeichnet, dass** mehrere benachbarte Formelemente partielle Ausnehmungen (102, 104, 105, 106, 107) aufweisen, die zur Bildung mindestens eines Entlüftungskanals zusammenwirken.

2. Form nach Anspruch 1, bei der alle Formelemente (1) Ausnehmungen (102) aufweisen, wobei die einen Ausnehmungen in Bezug auf die anderen Ausnehmungen so sind, dass ein etwa umlaufender Kanal gebildet wird, der die verbindenden Ausnehmungen (104) und mindestens eine ableitende Ausnehmung verbindet.

3. Form nach einem der vorhergehenden Ansprüche, wobei die Formelemente (1) einmündende Ausnehmungen (103) aufweisen, die den Entlüftungskanal mit dem inneren Volumen der Form verbinden.

4. Form nach einem der Ansprüche 1 oder 2, wobei sich die partiellen Ausnehmungen (106, 107) in einem Abstand "d" von dem Teil, der am nächsten zur Seitenfläche liegt, in etwa entlang der inneren Seitenfläche (10) erstrecken, wobei d unter 10 mm beträgt.

5. Form nach einem der vorhergehenden Ansprüche, wobei die Formelemente (1) Deformationen (108) aufweisen, die geeignet sind, eine Federfunktion zu gewährleisten, durch die die Elemente voneinander beabstandet werden, wenn die Form offen ist.

6. Form nach einem der vorhergehenden Ansprüche, bei der der Ring in Sektoren (11) unterteilt ist und bei der für jeden Sektor die Elemente, die zu einem Sektor gehören, zur Bildung eines einzigen Blocks fest miteinander verbunden sind, wobei jeder Sektor bei der Öffnungs- und Schließbewegung der Form verschoben werden kann.

7. Form nach Anspruch 6, wobei die Elemente, die zu einem Sektor gehören, an einem Rahmen (4) befestigt sind, wobei jeder Rahmen bei der Öffnungs- und Schließbewegung der Form verschoben werden kann.

8. Form nach einem der Ansprüche 6 oder 7, wobei der Ring in zwei Teile (G, D) unterteilt ist und der Ring in Querrichtung zwei unterschiedliche und benachbarte Elemente (1G, 1D) aufweist, die jeweils zu einem Teil gehören.

9. Form nach einem der Ansprüche 6 bis 8, **dadurch gekennzeichnet, dass** jedes Element eine Dicke von 0,1 bis 5 mm aufweist und **dadurch**, dass das Ende auf der Seite der zum Formen dienenden Seitenfläche (10) der Elemente eine Dicke hat, die radial in Richtung zur Achse der Form allmählich abnimmt.

10. Form nach einem der Ansprüche 6 bis 9, wobei die Elemente eines Sektors durch eine Befestigungsvorrichtung gehalten werden, die zwei Köpfe umfasst, die hervorstehen und jeweils an der freien Seite jedes Elements am Rand des Sektors aufliegen, wobei die Befestigungsvorrichtungen von einem Sektor zum anderen alternierend angeordnet sind, jeder Sektor Aussparungen (12) aufweist, die den Kopf der Befestigungsvorrichtungen der angrenzenden Sektoren aufnehmen können, wenn die Sektoren in Kontakt sind, um den Formring für den Laufstreifen zu bilden.

11. Form nach einem der Ansprüche 6 bis 10, die eine gerade Anzahl von Sektoren aufweist.

12. Verfahren zur Herstellung eines Luftreifens, **dadurch gekennzeichnet, dass** eine Form nach einem der Ansprüche 1 bis 11 verwendet wird, bei der die Entlüftung der Form zumindest zum Teil über mindestens einen Entlüftungskanal erfolgt.
